# FASCICULE DE BREVET EUROPEEN

(11) **EP 3 732 852 B1**
(45) Date de publication et mention de la délivrance du brevet: **22.12.2021**
(21) Numéro de dépôt: 18839601.4
(22) Date de dépôt: 27.12.2018
(51) Int. Cl.: H04L 29/06, H04W 12/06, G06F 21/35, H04L 29/08, H04L 9/32

(54) **PROCÉDÉ D'AUTHENTIFICATION À L'AIDE D'UN TERMINAL MOBILE UTILISANT UNE CLÉ ET UN CERTIFICAT STOCKÉS SUR UN SUPPORT EXTERNE**
VERFAHREN ZUR AUTHENTIFIZIERUNG MITTELS EINES MOBILEN ENDGERÄTS UNTER VERWENDUNG EINES SCHLÜSSELS UND EINES AUF EINEM EXTERNEN MEDIUM GESPEICHERTEN ZERTIFIKATS
METHOD FOR AUTHENTICATION BY MEANS OF A MOBILE TERMINAL USING A KEY AND A CERTIFICATE STORED ON AN EXTERNAL MEDIUM

(30) Priorité: 30.12.2017 FR 1701410
(43) Date de publication de la demande: 04.11.2020
(73) Titulaire: Imprimerie Nationale S.A., 75016 Paris (FR)
(72) Inventeur: LION, Stéphanie, 75016 Paris (FR)
(74) Mandataire: Nicolle, Olivier
(86) Numéro de dépôt international: PCT/FR2018/000275
(87) Numéro de publication internationale: WO 2019/129941

(56) Documents cités:
- EP-A1- 2 747 362
- US-A1- 2016 094 543
- Bahar Berna Kisin: "OPENID WITH CERTIFICATE-BASED USER AUTHENTICATION ON SMARTCARD", , 1 mai 2013 (2013-05-01), pages 1-67, XP055503341, Extrait de l'Internet: URL:http://www.thesis.bilkent.edu.tr/00065 67.pdf [extrait le 2018-08-30]

## Description

L'invention concerne un procédé pour authentifier un utilisateur afin qu'il puisse accéder à une application WEB protégée en utilisant un téléphone mobile.

### Etat de la technique

De nombreuses applications disponibles sur Internet nécessitent de protéger les échanges entre le serveur sur lequel est disponible l'application et le client ordinateur ou téléphone intelligent, c'est-à-dire le « smartphone » de l'utilisateur. Une méthode employée communément est la mise en œuvre du protocole dit « Transport Layer Security » (TLS) en terminologie anglo-saxonne, ou le prédécesseur dit « Secure Sockets Layer » (SSL), pour la sécurisation des échanges sur Internet.

Dans la majorité des cas, l'utilisateur authentifie le serveur TLS sur lequel il se connecte. Cette authentification est réalisée par l'utilisation d'un certificat numérique délivré par une autorité de certification. Des applications WEB peuvent utiliser l'authentification du poste client et de l'utilisateur en exploitant le protocole TLS. Il est alors possible d'offrir une authentification mutuelle entre le client et le serveur.

Par certificat on entend à la fois la clé privée et le certificat électronique associé (aussi appelé certificat numérique ou certificat de clé publique) qui peut être vu comme une carte d'identité numérique. Il est utilisé pour identifier et authentifier une personne physique ou morale. Le certificat électronique est signé par un tiers de confiance qui atteste du lien entre l'identité physique et l'entité numérique (virtuelle).

Le certificat client peut être stocké au format logiciel sur le poste client ou fourni par un dispositif matériel (notamment carte à puce, ou clé USB). Cette dernière solution permet d'offrir des mécanismes d'authentification forte.

La plupart des navigateurs web gèrent les protocoles TLS et SSL. Les navigateurs disponibles sur ordinateurs dans des environnements PC Windows ou MAC OSX permettent à l'utilisateur d'utiliser un dispositif matériel stockant sa clé et son certificat numérique.

Mais sur un smartphone utilisant des environnements de type Android ou Apple iOS, les seules solutions connues jusqu'à présent stockent la clé et le certificat numérique dans le logiciel interne du terminal mobile ou dans une carte au format µSD insérée dans le terminal mobile, ou dans la carte SIM du terminal mobile. Ceci limite fortement les transactions entre des téléphones mobiles et des serveurs hébergeant des applications WEB sécurisées.

Un tel procédé connu est décrit par exemple dans le document « Openid with certificate-based user authentication on smartcard » publié le 1^{er} mai 2013 dans internet sous l'URL : http://www.thesis.bilkent.edu.tr/0006567.pdf.

### Buts de l'invention

L'invention a pour but de permettre à un utilisateur de se connecter à une application WEB sécurisée, à l'aide de son smartphone fonctionnant sous Android ou Apple iOS, avec un navigateur internet standard (Chrome, Safari, ...), en utilisant une clé et un certificat stockés sur un dispositif externe sécurisé tel qu'une carte à puce.

Cela aura l'avantage pour un utilisateur de pouvoir mettre en œuvre le même dispositif externe (la carte à puce) pour authentifier l'utilisateur quel que soit son mode de connexion (PC, MAC, Smartphone) tout en assurant un niveau d'authentification fort.

De plus cela permettra de limiter le nombre de supports de clés et de certificats numériques à gérer par un utilisateur.

L'invention a par conséquent pour objet un procédé d'authentification un procédé d'authentification auprès d'une application WEB sécurisée d'un utilisateur pourvu d'un smartphone préalablement chargé avec un navigateur internet et une application mobile d'authentification, caractérisé en ce qu'il comporte des étapes consistant à :
- demander l'accès via le navigateur du smartphone à l'application WEB sécurisée ;
- rediriger la demande d'accès par l'application WEB vers un serveur d'authentification ;
- envoyer par le serveur d'authentification une demande d'authentification à l'utilisateur, sous la forme d'un challenge envoyé à son smartphone ;
- saisir par l'utilisateur son identifiant de connexion (adresse email, n° de téléphone, information d'identification biométrique ...) sur son smartphone ;
- demander à l'utilisateur, par l'application mobile d'authentification du smartphone, de présenter au moyen d'un support externe sécurisé, une clé et un certificat obtenu à partir de son identifiant de connexion, afin de débloquer l'utilisation de la clé et du certificat ;
- calculer par l'application d'authentification du smartphone un cryptogramme à partir du challenge reçu du serveur d'authentification et de la clé obtenue du support externe ;
- transmettre par le smartphone le cryptogramme calculé ainsi que le certificat de l'utilisateur au serveur d'authentification.
- vérifier à l'aide du serveur d'authentification le cryptogramme reçu du smartphone à l'aide du challenge transmis et du certificat d'authentification de l'utilisateur ;
- si la vérification est positive, l'utilisateur est authentifié et son accès aux services de l'application WEB est accordé.

Selon un mode de mise en œuvre avantageux de l'invention, le support externe sécurisé est une carte à puce ou une clé USB propre à l'utilisateur.

De préférence, ledit support externe sécurisé est configuré pour communiquer avec le smartphone en mode sans contact, par exemple en utilisant un protocole de communication de type NFC ou Bluetooth.

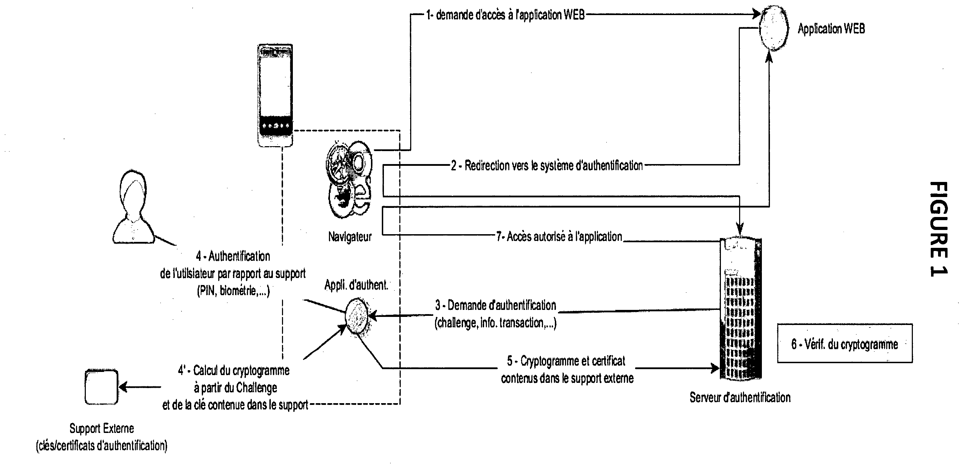

L'invention sera mieux comprise en lien avec la figure 1, qui représente les étapes du procédé d'authentification selon l'invention, et les composantes du système pour sa mise en œuvre.

### Description détaillée

Le procédé selon l'invention comporte une phase d'initialisation, et une phase de mise en œuvre.

Pendant la phase d'initialisation, un système d'authentification, centralisé ou non est installé dans un serveur d'authentification. Il permet en fonction du type de terminal utilisé (PC, MAC, Smartphone) d'orienter vers le type d'authentification adapté. On s'intéressera ici uniquement au cas de l'authentification par smartphone. Ce système d'authentification dispose de la clé publique de l'autorité de certification des certificats numériques des utilisateurs. Il sait dialoguer avec une application mobile d'authentification installée préalablement sur les smartphones des utilisateurs.

Les applications WEB à accès sécurisé font appel au système d'authentification pour authentifier les utilisateurs.

La phase de mise en œuvre se déroule selon les étapes suivantes, comme schématisé sur la figure 1.

Etape 1 : L'utilisateur dispose de son smartphone pourvu notamment d'un navigateur internet et d'une application d'authentification. Lorsque l'utilisateur veut accéder à l'application WEB protégée à partir du navigateur de son smartphone, l'application WEB le redirige vers le système d'authentification. Etape 2 : Le serveur d'authentification du système d'authentification envoie à l'utilisateur une demande d'authentification avec sa clé et son certificat d'authentification, via le navigateur de ton smartphone.

En réponse, l'utilisateur saisit sur son smartphone son identifiant de connexion (adresse email, n° de téléphone, information d'identification biométrique ...). Cet identifiant permet au système d'authentification de faire le lien avec l'application mobile d'authentification installée sur le smartphone.

Etape 3 : Une notification est envoyée à l'application mobile pour lancer la procédure d'authentification par clé et certificat. Cette demande comporte : un challenge (aléa) à signer et des informations destinées à informer l'utilisateur sur la transaction en cours. L'application mobile d'authentification affiche les informations sur la transaction en cours.

Etape 4 : L'application mobile d'authentification demande à l'utilisateur de présenter son support externe (carte à puce) et de fournir son code personnel d'identification ou son empreinte biométrique afin de débloquer l'utilisation de sa clé et son certificat sur son support externe. La communication entre le smartphone et le support externe peut se faire en mode sans contact, par exemple selon le protocole NFC ou Bluetooth.

Etape 4' : Une fois l'utilisation de la clé débloquée par l'utilisateur, le support externe (carte à puce) calcule le cryptogramme à partir du challenge reçu du serveur d'authentification et de la clé contenue dans le support externe. Ce cryptogramme correspond à une signature avec la clé du challenge reçu dans la notification.

Etape 5 : L'application mobile d'authentification du smartphone transmet le cryptogramme calculé ainsi que le certificat de l'utilisateur au serveur d'authentification.

Etape 6 : Le serveur d'authentification vérifie le cryptogramme reçu du smartphone à l'aide du challenge transmis et du certificat d'authentification de l'utilisateur. Si la vérification a réussi, l'utilisateur est authentifié et il peut accéder aux services de l'application WEB.

### Avantages de l'invention

L'invention atteint les buts fixés. Elle permet à un utilisateur doté d'un smartphone de s'authentifier de façon forte auprès d'une application WEB sécurisée, grâce à son smartphone et à l'usage d'une clé et d'un certificat stockés sur un dispositif externe sécurisé tel qu'une carte à puce.

Compte tenu du caractère de plus en plus universel de l'usage des smartphones, cela permet de multiplier les transactions sécurisées entre des utilisateurs pourvus d'un smartphone, et des applications WEB sécurisées.

## Revendications

1. - Procédé d'authentification auprès d'une application WEB sécurisée d'un utilisateur pourvu d'un smartphone préalablement chargé avec un navigateur internet, comportant des étapes consistant à :
- (0) charger une application mobile d'authentification dans le smartphone ;
- (1) demander l'accès via le navigateur du smartphone à l'application WEB sécurisée ;
- (2) rediriger la demande d'accès par l'application WEB vers un serveur d'authentification ;
- (3) envoyer par le serveur d'authentification une demande d'authentification à l'utilisateur, sous la forme d'un challenge envoyé à son smartphone ;
- (4) saisir par l'utilisateur son identifiant de connexion (adresse email, n° de téléphone, information d'identification biométrique ...) sur son smartphone ;
- (4') demander à l'utilisateur, par l'application mobile d'authentification du smartphone, de présenter au moyen d'un support externe sécurisé, une clé et un certificat obtenu à partir de son identifiant de connexion, afin de débloquer l'utilisation de la clé et du certificat et calculer par l'application d'authentification du smartphone un cryptogramme à partir du challenge reçu du serveur d'authentification et de la clé obtenue du support externe ;
- (5) transmettre par le smartphone le cryptogramme calculé ainsi que le certificat de l'utilisateur au serveur d'authentification.
- (6) vérifier à l'aide du serveur d'authentification le cryptogramme reçu du smartphone à l'aide du challenge transmis et du certificat d'authentification de l'utilisateur ;
- (7) si la vérification est positive, l'utilisateur est authentifié et son accès aux services de l'application WEB est accordé.

2. - Procédé selon la revendication 1, **caractérisé en ce que** le support externe sécurisé est une carte à puce ou une clé USB propre à l'utilisateur.

3. - Procédé selon l'une quelconque des revendications précédentes, **caractérisé en ce que** ledit support externe sécurisé est configuré pour communiquer avec le smartphone en mode sans contact.

4. - Procédé selon la revendication 3, **caractérisé en ce que** ledit support externe sécurisé utilise un protocole de communication de type NFC ou Bluetooth.

## Patentansprüche

1. Verfahren zur Authentifizierung, gegenüber einer gesicherten WEB-Anwendung, eines Nutzers, der über ein Smartphone verfügt, auf das zuvor ein Internet-Browser heruntergeladen wurde, umfassend Schritte, die aus Folgendem bestehen:
- (0) Herunterladen einer mobilen Authentifizierungsanwendung auf das Smartphone;
- (1) Anfordern des Zugangs zu der gesicherten WEB-Anwendung über den Browser des Smartphones;
- (2) Umleiten der Zugangsanforderung durch die WEB-Anwendung an einen Authentifizierungsserver;
- (3) Senden, durch den Authentifizierungsserver, einer Authentifizierungsanforderung an den Nutzer in Form einer an sein Smartphone gesendeten Challenge;
- (4) Eingeben, durch den Nutzer, seiner Verbindungskennung (E-Mail-Adresse, Telefonnummer, biometrische Identifikationsinformation...) in sein Smartphone;
- (4') Auffordern des Nutzers, durch die mobile Authentifizierungsanwendung des Smartphones, mit Hilfe eines gesicherten externen Mediums einen Schlüssel und ein anhand seiner Verbindungskennung erhaltenes Zertifikat zu präsentieren, um die Verwendung des Schlüssels und des Zertifikats freizugeben, und Berechnen, durch die Authentifizierungsanwendung des Smartphones, eines Kryptogramms anhand der von dem Authentifizierungsserver empfangenen Challenge und dem von dem externen Medium erhaltenen Schlüssel;
- (5) Übertragen, durch das Smartphone, des berechneten Kryptogramms sowie des Zertifikats des Nutzers an den Authentifizierungsserver;
- (6) Überprüfen, mit Hilfe des Authentifizierungsservers, des von dem Smartphone empfangenen Kryptogramms mit Hilfe der übertragenen Challenge und des Authentifizierungszertifikats des Nutzers;
- (7) wenn die Überprüfung erfolgreich ist, wird der Nutzer authentifiziert und sein Zugang zu den Diensten der WEB-Anwendung genehmigt.

2. Verfahren nach Anspruch 1, **dadurch gekennzeichnet, dass** das gesicherte externe Medium eine Chipkarte oder ein USB-Schlüssel ist, die/der dem Nutzer gehört.

3. Verfahren nach einem der vorhergehenden Ansprüche, **dadurch gekennzeichnet, dass** das gesicherte externe Medium dazu konfiguriert ist, kontaktlos mit dem Smartphone zu kommunizieren.

4. Verfahren nach Anspruch 3, **dadurch gekennzeichnet, dass** das gesicherte externe Medium ein Kommunikationsprotokoll vom Typ NFC oder Bluetooth verwendet.

## Claims

1. Method for authenticating a user with a secure web application, said user being equipped with a smartphone onto which an Internet browser has been pre-loaded, said method including steps of:
- (0) loading a mobile authentication application onto the smartphone;
- (1) requesting access to the secure web application via the browser of the smartphone;
- (2) the web application redirecting the access request to an authentication server;
- (3) the authentication server sending an authentication request to the user in the form of a challenge sent to the user's smartphone;
- (4) the user inputting their connection identifier (email address, telephone number, biometric identification information, etc.) on their smartphone;
- (4') the mobile authentication application of the smartphone asking the user to present, by means of a secure external medium, a key and a certificate obtained on the basis of the user's connection identifier in order to enable use of the key and of the certificate, and the authentication application of the smartphone calculating a cryptogram on the basis of the challenge received from the authentication server and the key obtained from the external medium;
- (5) the smartphone transmitting the calculated cryptogram and the user's certificate to the authentication server;
- (6) verifying, by means of the authentication server, the cryptogram received from the smartphone by means of the transmitted challenge and the user's authentication certificate;
- (7) if the verification is positive, the user is authenticated and is granted access to the services of the web application.

2. Method according to Claim 1, **characterized in that** the secure external medium is a chip card or a USB flash drive belonging to the user.

3. Method according to either one of the preceding claims, **characterized in that** said secure external medium is configured to communicate with the smartphone in contactless mode.

4. Method according to Claim 3, **characterized in that** said secure external medium uses an NFC- or Bluetooth-type communication protocol.
